# EUROPÄISCHE PATENTSCHRIFT

(11) **EP 4 696 530 B1**
(45) Veröffentlichungstag und Bekanntmachung des Hinweises auf die Patenterteilung: **02.12.2026**
(21) Anmeldenummer: 25193718.1
(22) Anmeldetag: 04.08.2025
(51) Int. Cl.: B60G 15/06, B60G 17/027, B60G 21/055

(54) **FAHRWERKSEINRICHTUNG MIT VERSTELLEINRICHTUNG FÜR STABILISATOREINRICHTUNG**
CHASSIS DEVICE WITH ADJUSTING DEVICE FOR STABILIZER DEVICE
DISPOSITIF DE SUSPENSION AVEC DISPOSITIF DE RÉGLAGE POUR DISPOSITIF STABILISATEUR

(30) Priorität: 12.08.2024 DE 102024122930
(43) Veröffentlichungstag der Anmeldung: 18.02.2026
(73) Patentinhaber: Vibracoustic SE, 69469 Weinheim (DE)
(72) Erfinder: Altinoluk, Ersan, Hamburg (DE); Bulling, Dieter, Wedemark (DE)
(74) Vertreter: Patentanwälte Olbricht Buchhold Keulertz

(56) Entgegenhaltungen:
- CN-U- 220 363 182
- DE-A1- 102006 056 632
- JP-A- 2007 269 164

## Beschreibung

Die Erfindung betrifft eine Fahrwerkseinrichtung. Die Fahrwerkseinrichtung weist zumindest eine Schwingungsdämpfereinheit und eine Stabilisatoreinrichtung auf. Durch die Schwingungsdämpfereinheit erstreckt sich eine Längsachse. Die Schwingungsdämpfereinheit umfasst einen Dämpfer, eine zumindest einen Teil des Dämpfers umgebende Feder und ein mittelbar oder unmittelbar an einem Fahrzeugrahmen anzuordnendes Gegenlager. An dem Gegenlager ist der Dämpfer gelagert. Das Gegenlager bildet eine erste Federanlagefläche aus, an der die Feder anliegt. Die Stabilisatoreinrichtung umfasst ein um eine Stabilisatorschwenkachse schwenkbar am Fahrzeugrahmen zu lagerndes Stabilisatorelement und zumindest ein Koppelelement. Das Koppelelement ist mit einem ersten Ende von der Stabilisatorschwenkachse beabstandet gelenkig am Stabilisatorelement und mit einem zweiten Ende gelenkig an der Schwingungsdämpfereinheit gelagert.

Eine derartige Fahrwerkseinrichtung ist aus dem Stand der Technik bekannt. Die Fahrwerkseinrichtung dient im Einsatz insbesondere zur Ausbildung eines MacPherson-Fahrwerkes. Das Koppelelement ist bei der bekannten Fahrwerkseinrichtung mit dem zweiten Ende gelenkig an einem Dämpferrohr des Dämpfers gelagert. Im Einsatz der Fahrwerkseinrichtung ist das zweite Ende des Koppelelementes damit ortsfest zu einer Drehachse eines Rades des Fahrwerkes.

Bei der Stabilisatoreinrichtung handelt es sich um eine Einrichtung, die zur Reduzierung des bei Kurvenfahrten entstehenden Wankwinkels dient. Das Stabilisatorelement wirkt typischerweise einem unterschiedlich weiten Einfedern der Vorderräder insofern entgegen, als mit ihm eine Torsion des Stabilisatorelementes einhergeht. Auch um die Möglichkeit der Torsion zu schaffen, ist das Stabilisatorelement im Einsatz mittels eines eine Schwenkbewegung um die Stabilisatorschwenkachse zulassenden, elastischen Stabilisatorlagers am Fahrzeugrahmen gelagert.

Aus dieser Form der Lagerung des Koppelelementes an der Schwingungsdämpfereinheit einerseits und der Lagerung des Stabilisatorelementes am Fahrzeugrahmen andererseits folgt notwendigerweise, dass unabhängig von der Torsion des Stabilisatorelementes mit jeder Höhenveränderung des Fahrzeugrahmens, insbesondere mit jeder quasistatischen Höhenveränderung des Fahrzeugrahmens, die beispielsweise mit einem Ein- und Aussteigen von Personen, mit einem Verändern des Beladungszustandes des Fahrzeuges oder aber bei einem Elektrofahrzeug mit einer Anpassung der Bodenfreiheit zur Regulierung der Batteriekühlung mittels Luftstrom am Unterboden des Fahrzeuges einhergeht, eine zumindest teilweise Verschwenkung des Stabilisatorelementes um die Stabilisatorschwenkachse einhergeht. Jede Verschwenkung bedeutet wiederum eine Scherungsbelastung des elastischen Stabilisatorlagers. Nachteilig ist die bekannte Fahrwerkseinrichtung wegen besonders großer Scherungsbelastungen, die sich aus der quasistatischen Höhenveränderung und während des Fahrbetriebs auftretenden dynamischen Höhenveränderungen zusammensetzt und im ungünstigen Fall zu einem vorzeitigen Ausfall des Stabilisatorlagers führen kann.

Fahrwerkseinrichtungen bzw. Verstelleinrichtungen dafür sind aus der JP 2007 269 164 A, aus der DE 10 2006 056 632 A1 und aus der CN 220 363 182 U bekannt.

Dokument JP 2007 269 164 A offenbart eine Fahrwerkseinrichtung gemäß dem Oberbegriff des Anspruchs 1.

Aufgabe der Erfindung ist einerseits die Bereitstellung einer weiterentwickelten Fahrwerkseinrichtung, durch die sich die Ausfallwahrscheinlichkeit des Stabilisatorlagers reduzieren lässt. Aufgabe der Erfindung ist andererseits die Bereitstellung eines Fahrzeuges mit einer erhöhten Zuverlässigkeit, dass die weiterentwickelte Fahrwerkseinrichtung aufweist.

Erstens wird die Fahrwerkseinrichtung zur Lösung der Aufgabe erfindungsgemäß derart ausgebaut, dass das Koppelelement mit seinem zweiten Ende an einer Verstelleinrichtung gelagert ist, die zu einer Bewegung des Koppelelementes relativ zum Dämpfer in eine zumindest anteilig axiale Verstellrichtung ausgebildet ist. Die Verstelleinrichtung ist insbesondere von der Schwingungsdämpfereinheit umfasst. Durch die Verstelleinrichtung ist die ortsfeste Anordnung des zweiten Endes des Koppelelementes relativ zur Drehachse aufgelöst und es kann aktiv auf die Verschwenkung des Stabilisatorelementes um die Stabilisatorschwenkachse und insbesondere auf die Torsion des Stabilisatorelementes Einfluss genommen werden. Insbesondere kann eine Verschwenkung, die gemäß dem Stand der Technik durch eine quasistatische Höhenveränderung des Fahrzeugrahmens verursacht würde, durch die Verstelleinrichtung kompensiert werden. Dadurch ist die Belastung der Lager zwischen dem Fahrzeugrahmen und dem Stabilisatorelement erheblich zu reduzieren. Dadurch wiederum ist die Ausfallwahrscheinlichkeit des Stabilisatorlagers und damit der Fahrwerkseinrichtung erheblich reduziert.

Die Schwingungsdämpfereinheit ist insbesondere als Federbein ausgebildet. Bevorzugt ist die Schwingungsdämpfereinheit als MacPherson-Federbein ausgebildet, das charakteristisch über die reine Feder- und Dämpferwirkung hinaus zur Aufnahme von im Einsatz durch das Rad auf die Schwingungsdämpfereinheit wirkenden Kräften ausgebildet ist. Die Feder erstreckt sich dabei insbesondere spiralförmig um eine Federlängsachse, die bevorzugt angewinkelt zur vorbeschriebenen Längsachse der Schwingungsdämpfereinheit und insbesondere des Dämpfers ausgerichtet ist. Durch die Anwinklung der Federlängsachse zur Längsachse ist die Feder optimal zur Aufnahme der genannten Kräfte und für eine gute Achskinematik ausgebildet.

Der Dämpfer umfasst insbesondere eine Dämpferstange und ein Dämpferrohr, die relativ zueinander bevorzugt in die Verstellrichtung beweglich sind. Die Dämpferstange ist bevorzugt am Gegenlager angeordnet. Das Dämpferrohr ist bevorzugt an einem Radträger anzuordnen oder angeordnet. Insbesondere umfasst der Dämpfer einen auf einem dem Gegenlager zugewandten Ende des Dämpferrohrs aufgesetzten Deckel. Bevorzugt ist zumindest ein Teil der Dämpferstange umgeben von einer insbesondere an dem Gegenlager anliegenden Zusatzfeder.

Das Gegenlager dient zu einer Montage der Schwingungsdämpfereinheit an dem Fahrzeugrahmen, insbesondere an einem Fahrzeugchassis. Das Gegenlager wird gemeinhin als "Topmount" bezeichnet. Das Gegenlager ist bevorzugt mehrteilig ausgebildet. Besonders bevorzugt umfasst es zumindest ein elastisches Lagerteil und/oder Wälzlager zur Aufnahme von Axial- und Radialkräften bei gleichzeitigem Torsionsfreiheitsgrad. Vorzugsweise ist das Gegenlager derart ausgebildet, dass zumindest die erste Federanlagefläche insbesondere um die Längsachse drehbar relativ zu einer von der ersten Federanlagefläche abgewandten und an das Fahrzeugchassis anzulegenden Anbindungsfläche des Gegenlagers ausgebildet ist. Theoretisch ist es auch denkbar, dass eine Drehentkopplung an einer anderen Stelle der Schwingungsdämpfereinheit vorgenommen wird, beispielsweise könnte diese in der Verstelleinrichtung integriert sein.

Die Verstelleinrichtung ist insbesondere zumindest teilweise am Dämpfer, bevorzugt am Dämpferrohr, angeordnet. Vorzugsweise ist die Verstelleinrichtung derart aufgebaut, dass die Verstellrichtung (ausschließlich) axial und damit parallel zur Längsachse ausgerichtet ist. Die Verstelleinrichtung ist insbesondere zu einer Bewegung des Koppelelementes ausgebildet, die von einer Bewegung des Dämpfers oder des Dämpferrohrs relativ zum Fahrzeugrahmen oder zu einem anderen Bestandteil der Fahrwerkseinrichtung unabhängig ausgelöst wird oder auszulösen ist. Insbesondere erlaubt die Verstelleinrichtung eine willkürliche Bewegung des Koppelelementes und/oder eine automatische Bewegung in Abhängigkeit von der tatsächlichen und/oder gewünschten Höhe des Fahrzeugrahmens insbesondere durch eine axiale Verschiebung eines nachfolgend näher beschriebenen Verbindungselementes relativ zum Radträger. Die Bewegung erfolgt insbesondere zumindest relativ zum Dämpfer und/oder Gegenlager und/oder Radträger der Schwingungsdämpfereinheit.

Die Verstelleinrichtung weist bevorzugt ein Steuergerät zur Steuerung der Bewegung des Koppelelementes auf. Die Steuerung erfolgt dabei bevorzugt ohne eine unmittelbare mechanische Abhängigkeit der Position des Koppelelementes von der Position eines weiteren Bestandteils der Fahrwerkseinrichtung. Alternativ zum Steuergerät kann die Verstelleinrichtung auch rein mechanisch ausgebildet sein.

Das Stabilisatorelement ist zumindest im Wesentlichen U-förmig und insbesondere einstückig ausgebildet. Das Stabilisatorelement wird auch als Stabilisatorstange oder Stabistange bezeichnet. Das Koppelelement bildet bevorzugt beidenends Kugelgelenke und/oder Elastomerlager aus. Das Koppelelement wird insbesondere als Stabilisatorkoppelstange oder Stabikoppelstange bezeichnet. Das erste Ende liegt dem zweiten Ende gegenüber.

Erfindungsgemäß umfasst die Verstelleinrichtung zumindest einen ersten Verstellpartner und zumindest einen zweiten Verstellpartner. Der erste Verstellpartner ist ortsfest zu zumindest einem Teil des Dämpfers, insbesondere zum Dämpfergehäuse, angeordnet. Der zweite Verstellpartner ist relativ zum ersten Verstellpartner in die Verstellrichtung beweglich. An dem zweiten Verstellpartner ist das Koppelelement gelagert. Der erste Verstellpartner ist im Einsatz der Fahrwerkseinrichtung insbesondere am Radträger anliegend angeordnet. Durch diesen zweiteiligen Aufbau der Verstelleinrichtung lässt sie sich besonders zuverlässig ausbilden. Zwischen dem ersten Verstellpartner und dem zweiten Verstellpartner bildet die Verstelleinrichtung erfindungsgemäß einen größenvariablen Fluidraum aus. Der Fluidraum ist bevorzugt zur Aufnahme eines Gases oder einer Flüssigkeit ausgebildet, das bzw. die zur Ausdehnung des Fluidraumes einzusetzen ist. Eine Variation der Größe des Fluidraumes bedeutet bevorzugt notwendigerweise eine Bewegung des Koppelelementes in die Verstellrichtung oder entgegen der Verstellrichtung. Bevorzugt weist die Verstelleinrichtung zumindest ein Ventil zur Befüllung und/oder zum Entleeren des Fluidraumes auf. Der erste Verstellpartner und/oder der zweite Verstellpartner umgeben/umgibt die Längsachse bevorzugt vollständig. Vom Aufbau her ist somit auf im Fahrzeugbereich grundsätzlich bewehrte Verstelleinrichtungen zurückzugreifen.

Erfindungsgemäß weist die Verstelleinrichtung zur Ausbildung des Fluidraumes zumindest einen Rollbalg auf. Der Rollbalg ist am ersten Verstellpartner und am zweiten Verstellpartner befestigt. Besonders bevorzugt bildet der Rollbalg mindestens eine Rollfalte aus. Hierdurch ist der größenvariable Fluidraum auf eine konstruktiv einfache und zuverlässige Weise ausgebildet. Im Einsatz entrollt sich der Rollbalg mit einer Befüllung des Fluidraumes und rollt sich der Rollbalg bei einer Entleerung des Fluidraumes auf. Alternativ zum Rollbalg mit Rollfalte ist die Verwendung eines Fluidkissens möglich.

Vorzugsweise ist die Verstelleinrichtung derart ausgebildet, dass der Fluidraum in die Verstellrichtung versetzt zum zweiten Ende des Koppelelementes ausgebildet ist. Das gilt insbesondere in jeder Stellung der Verstelleinrichtung. Das bedeutet, dass der Fluidraum vollständig einerseits einer zur Längsrichtung rechtwinkeligen Ebene und das zweite Ende andererseits dieser Ebene angeordnet ist. Der zweite Verstellpartner weist erfindungsgemäß ein radial von der Längsachse abstehendes Verbindungselement auf, an dem das zweite Ende des Koppelelementes gelenkig befestigt ist. Das Verbindungselement ist besonders bevorzugt insgesamt andererseits der genannten Ebene angeordnet. Dadurch wird erreicht, dass das zweite Ende des Koppelelementes trotz des Fluidraumes eine bevorzugte Nähe zur Längsachse haben kann. Dadurch bleibt die optimierte Wirkung der Stabilisatoreinrichtung im Einsatz unangetastet.

Das Verbindungselement ist erfindungsgemäß derart zur Lagerung des zweiten Endes des Koppelelementes ausgebildet, dass ein erster Abstand zwischen dem zweiten Ende des Koppelelementes und der Längsachse kleiner ist als ein zweiter Abstand einer von der Längsachse abgewandten Außenfläche des zweiten Verstellpartners von der Längsachse. Eine zur Längsachse parallele Gerade, die die Außenfläche des zweiten Verstellpartners berührt, schneidet bevorzugt das zweite Ende des Koppelelementes und/oder das Verbindungselement. Hierdurch wird eine Dimensionierung der Verstelleinrichtung zur Erreichung ausreichender Kräfte zur Bewegung des Koppelelementes ermöglicht.

Bevorzugt weist der zweite Verstellpartner ein rohrförmiges Überbrückungselement auf. Daran ist besonders bevorzugt das Koppelelement unmittelbar oder mittels des Verbindungselementes angeordnet. Der zweite Verstellpartner weist erfindungsgemäß an seinem dem ersten Verstellpartner zugewandten Ende radial abstehendes Kraftaufnahmeelement auf, das die vorgenannte Außenfläche aufweist. Der zweite Verstellpartner weist das Kraftaufnahmeelement alternativ oder zusätzlich zum Überbrückungselement auf. Das Kraftaufnahmeelement steht insbesondere vom Überbrückungselement radial ab. Das Kraftaufnahmeelement ist insbesondere flansch- oder lochscheibenförmig ausgebildet. Das Verbindungselement ist erfindungsgemäß zwischen dem Kraftaufnahmeelement und der Feder angeordnet.

Vorzugsweise ist die Verstelleinrichtung als Fußpunktverstelleinrichtung ausgebildet. Das bedeutet, dass die Verstelleinrichtung zur Veränderung der Position zumindest eines Teils der Feder, insbesondere relativ zum Gegenlager und/oder zum Dämpfergehäuse, ausgebildet ist. Der Teil der Feder ist insbesondere das vom Gegenlager angewandte Ende der Feder. Die Verstelleinrichtung ist insbesondere derart ausgebildet, dass ein in die Verstellrichtung gemessener Abstand zwischen dem vom Gegenlager abgewandten Ende der Feder und dem zweiten Ende des Koppelelementes konstant bleibt, während sich der Abstand des Verbindungselementes zum Radträger verstellen lässt. Ein vom ersten Verstellpartner abgewandtes Ende des zweiten Verstellpartners ist insbesondere durch ein radial abstehendes Federanlageelement ausgebildet, das eine zweite Federanlagefläche ausbildet, an der die Feder anliegt, und insbesondere einen Federteller bildet. Auch das Federanlageelement ist bevorzugt flansch- oder lochscheibenförmig ausgebildet. Insbesondere ist das Federanlageelement mit der zweiten Federanlagefläche, an der die Feder vorzugsweise kraft- und/oder formschlüssig anliegt, starr mit dem Verbindungselement verbunden. Das Federanlageelement ist insbesondere derart ausgebildet, dass eine von der Längsachse abgewandte Außenfläche des Federanlageelementes weiter von der Längsachse beabstandet ist als das zweite Ende des Koppelelementes.

Durch die Ausbildung der Verstelleinrichtung als Fußpunktverstelleinrichtung bündelt die Verstelleinrichtung zweierlei Funktionen. Es lässt sich durch die Verstelleinrichtung einerseits das elastische Stabilisatorlager durch die Reduktion der durch die quasistatischen Höhenveränderungen erzeugten Scherungsbelastungen schonen und Einfluss auf die Torsion des Stabilisatorelementes zur Veränderung der stabilisierenden Wirkung insbesondere bei den dynamischen Höhenveränderungen nehmen. Andererseits lässt sich durch die Verstelleinrichtung die Höhe des Fahrzeugrahmens über dem Boden verändern, beispielsweise um die Aerodynamik oder die Kühlwirkung zu variieren. Durch die Bündelung wird gerade erreicht, dass die Höhenveränderung ganz oder weitgehend ohne eine Belastung des Stabilisatorlagers möglich ist.

Die Fahrwerkseinrichtung umfasst außer der Schwingungsdämpfereinheit bevorzugt den Radträger, eine Radnabe, die um eine Drehachse drehbar am Radträger gelagert ist, und das an der Radnabe angeordnete Rad. Das Rad weist eine Radfelge auf, die einen sich rotationssymmetrisch um die Drehachse erstreckenden Felgenring umfasst. Ein vom Gegenlager abgewandtes Ende des Dämpfers ist in dieser Ausgestaltung der Erfindung am Radträger angeordnet. Das Koppelelement ist derart angeordnet, dass die Längsachse sich zwischen dem zweiten Ende des Koppelelementes und zumindest einem Teil des Felgenrings hindurch erstreckt. Durch diesen Aufbau wird trotz der Verstelleinrichtung, insbesondere der Fußpunktverstelleinrichtung, die übliche und zuverlässige Anbindung der Stabilisatoreinrichtung erreicht. Bevorzugt ist die Fahrwerkseinrichtung spiegelsymmetrisch zu einer Mittellängsachse ausgebildet, die rechtwinklig zur Stabilisatorschwenkachse ausgerichtet ist.

Zweitens wird zur Lösung der Aufgabe ein Fahrzeug bereitgestellt. Das Fahrzeug weist einen Fahrzeugrahmen und eine vorbeschriebene Fahrwerkseinrichtung auf. Das Fahrzeug umfasst zumindest ein Lagerelement, das das Stabilisatorelement umgibt und am Stabilisatorelement befestigt ist. Das Lagerelement dient zur Verschwenkung des Stabilisatorelementes um die Stabilisatorschwenkachse. Bevorzugt ist das Lagerelement zwischen dem Stabilisatorelement und dem Fahrzeugrahmen angeordnet und/oder aus einem elastisch verformbaren Material, insbesondere Kunststoff, ausgebildet. Das Fahrzeug umfasst bevorzugt zumindest ein ortsfest an dem Fahrzeugrahmen angeordnetes Lagerschellenelement. Das Lagerschellenelement weist eine in Richtung der Stabilisatorschwenkachse durchgehende Ausnehmung auf, in der das Stabilisatorelement angeordnet ist. Insbesondere ist das Stabilisatorelement derart in der Ausnehmung angeordnet, dass das Lagerelement zwischen dem Lagerschellenelement und dem Stabilisatorelement angeordnet ist. Das Lagerelement und das Lagerschellenelement bilden gemeinsam das elastische Stabilisatorlager aus. Mit einer Verschwenkung des Stabilisatorelementes relativ zum Fahrzeugrahmen geht bei diesem Aufbau insbesondere eine Scherungsbelastung des Lagerelementes insbesondere mit in dessen Elastomer auftretender Dehnung einher, die durch die Verstelleinrichtung zu reduzieren ist, wodurch die Lebensdauer des Lagerelementes zu erhöhen ist.

Das Gegenlager ist, insbesondere wie das Lagerschellenelement, am Fahrzeugrahmen angeordnet. Vorzugsweise liegt das Gegenlager mit der Anbindungsfläche am Fahrzeugrahmen an. Mit der Anordnung des Gegenlagers am Fahrzeugrahmen ist eine ortsfeste Anordnung zumindest eines Teils des Gegenlagers am Fahrzeugrahmen gemeint. Dieser Teil ist relativ zum Lagerschellenelement oder zu einem anderen Teil des elastischen Stabilisatorlagers insofern als ortsfest angeordnet zu verstehen, als keine aktive Bewegung der beiden Teile zueinander beabsichtigt ist.

Im Detail weist das Fahrzeug bevorzugt je zwei Lagerelemente und Lagerschellenelemente auf. Das zumindest eine Lagerschellenelement ist besonders bevorzugt mit dem Fahrzeugrahmen verschraubt. Das zumindest eine Lagerelement ist bevorzugt an das Stabilisatorelement angeklebt, anvulkanisiert und/oder verklemmt und/oder aus einem Elastomer ausgebildet.

Weitere Einzelheiten und Vorteile sind der nachfolgend beschriebenen, schematisch dargestellten Figur zu entnehmen; es zeigt:

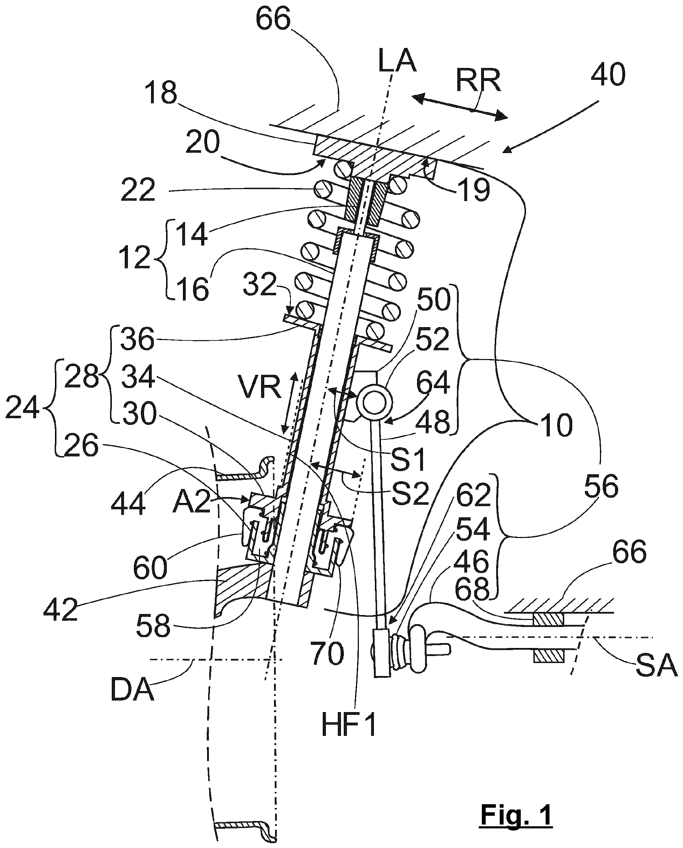

- Fig. 1: eine erfindungsgemäße Fahrwerkseinrichtung in einer Schnittdarstellung.

Die in der gesamten Beschreibung enthaltenen Offenbarungen sind sinngemäß auf gleiche Teile mit gleichen Bezugszeichen beziehungsweise gleichen Bauteilbezeichnungen übertragbar. Auch sind die in der Beschreibung gewählten Lageangaben auf die beschriebene Fig. bezogen. Die nachfolgend beschriebenen Merkmale können auch in einer anderen Kombination als unmittelbar beschrieben oder gezeigt Gegenstand der Erfindung sein.

Die Fig. 1 zeigt eine Fahrwerkseinrichtung 40 mit einer Schwingungsdämpfereinheit 10. Durch die Schwingungsdämpfereinheit 10 erstreckt sich eine Längsachse LA. Die Schwingungsdämpfereinheit 10 umfasst einen Dämpfer 12, der eine Dämpferstange 14 und ein Dämpferrohr 16 aufweist. Außerdem weist die Schwingungsdämpfereinheit 10 eine Feder 22 auf, die einen Teil des Dämpfers 12 umgibt.

Ein oberes Ende der Feder 22 ist an einer ersten Federanlagefläche 20 eines Gegenlagers 18 angeordnet. Das Gegenlager 18 ist in Fig. 1 erheblich vereinfacht und trotz eines tatsächlich komplexeren Aufbaus schematisch einteilig dargestellt. Das Gegenlager 18 liegt mit einer Anbindungsfläche 19 an einem Fahrzeugrahmen 66 an. Der Dämpfer 12 ist mit der Dämpferstange 14 am Gegenlager 18 angeordnet.

Das Dämpferrohr 16 ist mit seinem vom Gegenlager 18 abgewandten Ende an einem Radträger 42 angeordnet. Am Radträger 42 ist eine relativ zum Radträger 42 um eine Drehachse DA drehbare Radnabe angeordnet, die nicht dargestellt ist. An der Radnabe ist ein Rad mit einer Felge befestigt, die einen teilweise dargestellten Felgenring 44 aufweist.

Zwischen der Feder 22 und dem Radträger 42 ist eine Verstelleinrichtung 24 angeordnet. Die Verstelleinrichtung 24 weist einen ersten Verstellpartner 26 auf, der am Radträger 42 anliegt und ortsfest zum Dämpferrohr 16 angeordnet ist. Außerdem weist die Verstelleinrichtung 24 einen zweiten Verstellpartner 28 auf, der relativ zum ersten Verstellpartner 26 in eine Verstellrichtung VR beweglich ist. Die Verstellrichtung VR ist parallel zur Längsachse LA ausgerichtet.

Der zweite Verstellpartner 28 umfasst ein Kraftaufnahmeelement 30, ein Überbrückungselement 34 und ein Federanlageelement 36. Das Kraftaufnahmeelement 30 bildet ein dem ersten Verstellpartner 26 zugewandtes Ende des zweiten Verstellpartners 28 aus und erstreckt sich flanschförmig. Das Überbrückungselement 34 erstreckt sich rohrförmig um die Längsachse LA vom Kraftaufnahmeelement 30 in Richtung des Gegenlagers 18 bis zum Federanlageelement 36. Das Federanlageelement 36 bildet eine zweite Federanlagefläche 32 für die Feder 22 aus und erstreckt sich wiederum flanschförmig.

Die Verstelleinrichtung 24 bildet zwischen dem ersten Verstellpartner 26 und dem zweiten Verstellpartner 28 einen Fluidraum 58 aus. Dazu weist die Verstelleinrichtung 24 einen Rollbalg 60 auf, der sich vom ersten Verstellpartner 26 bis zum zweiten Verstellpartner 28 erstreckt.

Die Fahrwerkseinrichtung 40 weist neben der Schwingungsdämpfereinheit 10 eine Stabilisatoreinrichtung 56 auf. Die Stabilisatoreinrichtung 56 umfasst im Wesentlichen ein Stabilisatorelement 46 und zumindest ein Koppelelement 48. Das Stabilisatorelement 46 ist U-förmig und spiegelsymmetrisch ausgebildet. Das Stabilisatorelement 46 ist mittels eines elastischen Stabilisatorlagers 68 am Fahrzeugrahmen 66 schwenkbeweglich um eine Stabilisatorschwenkachse SA gelagert. Das Koppelelement 48 weist ein erstes Ende 62 und ein zweites Ende 64 auf. Das Koppelelement 48 ist mittels eines ersten Koppelgelenkes 52 mit einem Verbindungselement 50 verbunden, das am Überbrückungselement 34 angeordnet ist. Das Koppelement 48 ist mittels eines zweiten Koppelgelenkes 54 mit dem Stabilisatorelement 46 verbunden.

Ein erster Abstand S1 des zweiten Endes 64 des Koppelelementes 48 von der Längsachse LA ist kleiner als ein zweiter Abstand S2 einer von der Längsachse LA abgewandten Außenfläche A2 des Kraftaufnahmeelementes 30 von der Längsachse LA. Beide Abstände S1, S2 werden dabei in eine in Bezug auf die Längsachse LA radiale Richtung RR gemessen. Eine Hilfsfläche HF1, in der eine Außenfläche des Überbrückungselementes 34 liegt, schneidet sowohl das Kraftaufnahmeelement 30 als auch das Federanlageelement 36.

### Bezugszeichenliste

- 10: Schwingungsdämpfereinheit
- 12: Dämpfer
- 14: Dämpferstange
- 16: Dämpferrohr
- 18: Gegenlager
- 19: Anbindungsfläche des Gegenlagers
- 20: Erste Federanlagefläche
- 22: Feder
- 24: Verstelleinrichtung
- 26: Erster Verstellpartner
- 28: Zweiter Verstellpartner
- 30: Kraftaufnahmeelement
- 32: Zweite Federanlagefläche
- 34: Überbrückungselement
- 36: Federanlageelement
- 40: Fahrwerkseinrichtung
- 42: Radträger
- 44: Felgenring
- 46: Stabilisatorelement
- 48: Koppelelement
- 50: Verbindungselement
- 52: Erster Koppelgelenk
- 54: Zweites Koppelgelenk
- 56: Stabilisatoreinrichtung
- 58: Fluidraum
- 60: Rollbalg
- 62: Erstes Ende des Koppelelementes
- 64: Zweites Ende des Koppelelementes
- 66: Fahrzeugrahmen
- 68: Stabilisatorlager
- 70: Rollfalte
- A2: Außenfläche des zweiten Verstellpartners
- DA: Drehachse
- HF1: Erste Hilfsfläche
- LA: Längsachse
- S2: Zweiter Abstand
- S1: Erster Abstand
- RR: Radiale Richtung
- SA: Stabilisatorschwenkachse
- VR: Verstellrichtung

## Patentansprüche

1. Fahrwerkseinrichtung (40) aufweisend zumindest eine Schwingungsdämpfereinheit (10), durch die sich eine Längsachse (LA) erstreckt und die einen Dämpfer (12), eine zumindest einen Teil des Dämpfers (12) umgebende Feder (22), ein mittelbar oder unmittelbar an einem Fahrzeugrahmen (66) anzuordnendes Gegenlager (18) umfasst, an dem der Dämpfer (12) gelagert ist und das eine erste Federanlagefläche (20), an der die Feder (22) anliegt, ausbildet, und eine Stabilisatoreinrichtung (56), umfassend ein um eine Stabilisatorschwenkachse schwenkbar am Fahrzeugrahmen (66) zu lagerndes Stabilisatorelement (46) und zumindest ein Koppelelement (48), das mit einem ersten Ende (62) von der Stabilisatorschwenkachse (SA) beabstandet gelenkig am Stabilisatorelement (46) und mit einem zweiten Ende (64) gelenkig an der Schwingungsdämpfereinheit (10) gelagert ist,
wobei das Koppelelement (48) an einer Verstelleinrichtung (24) gelagert ist, die zu einer Bewegung des Koppelelementes (48) relativ zum Dämpfer (12) in eine zumindest anteilig axiale Verstellrichtung (VR) ausgebildet ist, wobei die Verstelleinrichtung (24) einen ersten Verstellpartner (26), der ortsfest zu zumindest einem Teil des Dämpfers (12) angeordnet ist, und einen zweiten Verstellpartner (28) umfasst, der relativ zum ersten Verstellpartner (26) in die Verstellrichtung (VR) beweglich ist und an dem das Koppelelement (48) gelagert ist, und zwischen dem ersten Verstellpartner (26) und dem zweiten Verstellpartner (28) einen größenvariablen Fluidraum (58) ausbildet,
**dadurch gekennzeichnet, dass** die Verstelleinrichtung (24) zur Ausbildung des Fluidraumes (52) zumindest einen Rollbalg (60) aufweist, der am ersten Verstellpartner (26) und am zweiten Verstellpartner (28) befestigt ist, wobei der zweite Verstellpartner (28) ein radial von der Längsachse (LA) abstehendes Verbindungselement (50) aufweist, an dem das zweite Ende (64) des Koppelelementes (48) gelenkig befestigt ist und wobei das Verbindungselement (50) derart zur Lagerung des zweiten Endes (64) ausgebildet ist, dass ein erster Abstand (S1) zwischen dem zweiten Ende (64) und der Längsachse (LA) kleiner ist als ein zweiter Abstand (S2) einer von der Längsachse (LA) abgewandten Außenfläche (A2) des zweiten Verstellpartners (28) von der Längsachse (LA), wobei der zweite Verstellpartner (28) an seinem dem ersten Verstellpartner (26) zugewandten Ende ein radial abstehendes Kraftaufnahmeelement (30) aufweist, das die Außenfläche (A2) aufweist, wobei das Verbindungselement (50) zwischen dem Kraftaufnahmeelement (30) und der Feder (22) angeordnet ist.

2. Fahrwerkseinrichtung nach Anspruch 1, **gekennzeichnet durch** eine derartige Ausbildung der Verstelleinrichtung (24), dass der Fluidraum (58) in die Verstellrichtung (VR) versetzt zum zweiten Ende (64) des Koppelelementes (48) ausgebildet ist.

3. Fahrwerkseinrichtung nach einem der vorhergehenden Ansprüche,
**dadurch gekennzeichnet, dass** der zweite Verstellpartner (28) ein rohrförmiges Überbrückungselement (34), an dem das Verbindungselement (50) angeordnet ist, und ein von einem dem ersten Verstellpartner (26) zugewandten Ende des Überbrückungselementes (34) radial abstehendes Kraftaufnahmeelement (30) umfasst, das die Außenfläche (A2) aufweist.

4. Fahrwerkseinrichtung nach einem der vorhergehenden Ansprüche, **dadurch gekennzeichnet, dass** die Verstelleinrichtung (24) als Fußpunktverstelleinrichtung ausgebildet ist und der zweite Verstellpartner (28) zwischen dem zweiten Ende (64) des Koppelelementes (48) und dem Gegenlager (18) ein Federanlageelement (36) mit einer zweite Federanlagefläche (32) aufweist, an der die Feder (22) kraft- und/oder formschlüssig anliegt.

5. Fahrwerkseinrichtung nach einem der vorhergehenden Ansprüche, **gekennzeichnet durch** einen Radträger (42), eine Radnabe, die um eine Drehachse (DA) drehbar am Radträger (42) gelagert ist, ein an der Radnabe angeordnetes Rad mit einer einen sich rotationssymmetrisch um die Drehachse (DA) erstreckenden Felgenring (44) aufweisenden Radfelge, wobei ein vom Gegenlager (18) abgewandtes Ende des Dämpfers (12) am Radträger (42) angeordnet ist und das Koppelelement (48) derart angeordnet ist, dass die Längsachse (LA) sich zwischen dem zweiten Ende (64) des Koppelelementes (48) und zumindest einem Teil des Felgenrings (44) hindurcherstreckt.

6. Fahrzeug aufweisend einen Fahrzeugrahmen (66) und eine Fahrwerkseinrichtung nach einem der vorhergehenden Ansprüche, die zumindest ein das Stabilisatorelement (46) umgebendes Lagerelement, das am Stabilisatorelement (46) befestigt ist und zur Verschwenkung des Stabilisatorelementes (46) um die Stabilisatorschwenkachse aus einem elastisch verformbar ausgebildet ist, und zumindest ein ortsfest am dem Fahrzeugrahmen (66), an dem das zumindest eine Gegenlager (18) ortsfest angeordnet ist, angeordnetes Lagerschellenelement umfasst, das eine in Richtung der Stabilisatorschwenkachse durchgehende Ausnehmung aufweist, in der das Stabilisatorelement (46) derart angeordnet ist, dass das Lagerelement zwischen dem Lagerschellenelement und dem Stabilisatorelement angeordnet ist.

## Claims

1. Chassis assembly (40) comprising at least one vibration damper unit (10) through which a longitudinal axis (LA) extends and which comprises a damper (12), a spring (22) surrounding at least part of the damper (12), and a counter-bearing (18) to be arranged directly or indirectly on a vehicle frame (66), on which the damper (12) is mounted and which forms a first spring contact surface (20) against which the spring (22) bears, and a stabiliser device (56), comprising a stabiliser element (46) to be mounted on the vehicle frame (66) so as to pivot about a stabiliser pivot axis, and at least one coupling element (48) which is articulated to the stabiliser element (46) with a first end (62) spaced apart from the stabiliser pivot axis (SA) and is articulated to the vibration damper unit (10) with a second end (64),
wherein the coupling element (48) is mounted on an adjustment mechanism (24) which is configured to allow movement of the coupling element (48) relative to the damper (12) in an at least partially axial adjustment direction (VR), wherein the adjustment mechanism (24) comprises a first adjustment partner (26), which is fixed relative to at least part of the damper (12), and a second adjustment partner (28), which is movable relative to the first adjustment partner (26) in the adjustment direction (VR) and on which the coupling element (48) is mounted, and which forms a variable-volume fluid chamber (58) between the first adjustment partner (26) and the second adjustment partner (28),
**characterised in that**, for the purpose of forming the fluid chamber (52), the adjustment mechanism (24) comprises at least one roll bellows (60) which is secured to the first adjustment partner (26) and to the second adjustment partner (28), wherein the second adjustment partner (28) comprises a connecting element (50) projecting radially from the longitudinal axis (LA), to which the second end (64) of the coupling element (48) is hinged, and wherein the connecting element (50) is configured to support the second end (64) such that a first distance (S1) between the second end (64) and the longitudinal axis (LA) is smaller than a second distance (S2) between an outer surface (A2) of the second adjustment partner (28) - which faces away from the longitudinal axis (LA) - and the longitudinal axis (LA), wherein the second adjustment partner (28) has, at its end facing the first adjustment partner (26), a radially projecting force-absorbing element (30) which comprises the outer surface (A2), and wherein the connecting element (50) is arranged between the force-absorbing element (30) and the spring (22).

2. Chassis assembly according to claim 1, **characterised in that** the adjustment mechanism (24) is configured such that the fluid chamber (58) is formed offset in the adjustment direction (VR) relative to the second end (64) of the coupling element (48).

3. Chassis assembly according to one of the preceding claims, **characterised in that** the second adjustment partner (28) comprises a tubular bypass element (34), on which the connecting element (50) is arranged, and a force-absorbing element (30), which has the outer surface (A2) and which is projecting radially from an end of the bypass element (34) facing the first adjustment partner (26).

4. Chassis assembly according to one of the preceding claims, **characterised in that** the adjustment mechanism (24) is designed as a foot-point adjustment device and the second adjustment partner (28) comprises, between the second end (64) of the coupling element (48) and the counter-bearing (18), a spring contact element (36) with a second spring contact surface (32) against which the spring (22) bears in a force- and/or form-fitting manner.

5. Chassis assembly according to one of the preceding claims, **characterised by** a wheel carrier (42), a wheel hub mounted on the wheel carrier (42) so as to be rotatable about an axis of rotation (DA), a wheel arranged on the wheel hub and comprising a wheel rim having a rim ring (44) extending rotationally symmetrically about the axis of rotation (DA), wherein an end of the damper (12) facing away from the counter-bearing (18) is arranged on the wheel carrier (42), and the coupling element (48) is arranged such that the longitudinal axis (LA) extends between the second end (64) of the coupling element (48) and at least a portion of the rim ring (44).

6. Vehicle comprising a vehicle frame (66) and a chassis assembly according to one of the preceding claims, which comprises at least one bearing element surrounding the stabiliser element (46), which is secured to the stabiliser element (46) and is designed to be elastically deformable to allow the stabiliser element (46) to pivot about the stabiliser pivot axis, and at least one bearing clamp element arranged in a fixed position on the vehicle frame (66), on which the at least one counter-bearing (18) is fixedly arranged, which comprises a recess extending in the direction of the stabiliser pivot axis, in which the stabiliser element (46) is arranged such that the bearing element is situated between the bearing clamp element and the stabiliser element.

## Revendications

1. Dispositif de suspension (40) comprenant au moins une unité d'amortissement des vibrations (10) traversée par un axe longitudinal (LA) et comportant un amortisseur (12), un ressort (22) entourant au moins une partie de l'amortisseur (12), ainsi qu'un contre-palier (18) destiné à être disposé directement ou indirectement sur un châssis de véhicule (66), sur lequel l'amortisseur (12) est monté et qui forme une première surface d'appui de ressort (20) contre laquelle s'appuie le ressort (22), et un dispositif stabilisateur (56), comprenant un élément stabilisateur (46) destiné à être monté de manière pivotante sur le châssis du véhicule (66) autour d'un axe de pivotement du stabilisateur, et au moins un élément de couplage (48) qui est articulé, par une première extrémité (62) espacée de l'axe de pivotement du stabilisateur (SA), à l'élément stabilisateur (46) et, par une deuxième extrémité (64), à l'unité d'amortissement des vibrations (10),
l'élément de couplage (48) étant monté sur un dispositif de réglage (24) conçu pour permettre un déplacement de l'élément de couplage (48) par rapport à l'amortisseur (12) dans une direction de réglage (VR) au moins partiellement axiale, le dispositif de réglage (24) comportant un premier partenaire de réglage (26), qui est disposé de manière fixe par rapport à au moins une partie de l'amortisseur (12), et un deuxième partenaire de réglage (28), qui est mobile par rapport au premier partenaire de réglage (26) dans la direction de réglage (VR) et sur lequel est monté l'élément de couplage (48), et forme, entre le premier partenaire de réglage (26) et le deuxième partenaire de réglage (28), une chambre de fluide (58) de volume variable,
**caractérisé en ce que,** pour former la chambre de fluide (52), le dispositif de réglage (24) comporte au moins un soufflet roulant (60) fixé au premier partenaire de réglage (26) et au deuxième partenaire de réglage (28), le deuxième partenaire de réglage (28) comportant un élément de liaison (50) s'étendant radialement à partir de l'axe longitudinal (LA), sur lequel la deuxième extrémité (64) de l'élément de couplage (48) est fixée de manière articulée, et l'élément de liaison (50) étant conçu pour le logement de la deuxième extrémité (64) de telle sorte qu'une première distance (S1) entre la deuxième extrémité (64) et l'axe longitudinal (LA) soit inférieure à une deuxième distance (S2) entre une surface extérieure (A2) du deuxième partenaire de réglage (28), située à l'opposé de l'axe longitudinal (LA), et l'axe longitudinal (LA), le deuxième partenaire de réglage (28) comportant, à son extrémité tournée vers le premier partenaire de réglage (26), un élément de reprise de force (30) faisant saillie radialement, qui présente la surface extérieure (A2), l'élément de liaison (50) étant disposé entre l'élément de reprise de force (30) et le ressort (22).

2. Dispositif de suspension selon la revendication 1, **caractérisé en ce que** le dispositif de réglage (24) est conçu de telle sorte que la chambre de fluide (58) est décalée dans la direction de réglage (VR) par rapport à la deuxième extrémité (64) de l'élément de couplage (48).

3. Dispositif de suspension selon l'une des revendications précédentes, **caractérisé en ce que** le deuxième partenaire de réglage (28) comprend un élément de pontage tubulaire (34) sur lequel est disposé l'élément de liaison (50), et d'un élément de reprise de force (30) s'étendant radialement à partir d'une extrémité de l'élément de pontage (34) tournée vers le premier partenaire de réglage (26), lequel élément de reprise de force présente la surface extérieure (A2).

4. Dispositif de suspension selon l'une des revendications précédentes, **caractérisé en ce que** le dispositif de réglage (24) est conçu comme un dispositif de réglage du point d'appui et **en ce que** le deuxième partenaire de réglage (28) comporte, entre la deuxième extrémité (64) de l'élément de couplage (48) et le contre-palier (18), un élément d'appui de ressort (36) comportant une deuxième surface d'appui de ressort (32) contre laquelle le ressort (22) s'appuie par adhérence et/ou par complémentarité de forme.

5. Dispositif de suspension selon l'une des revendications précédentes, **caractérisé par** un support de roue (42), un moyeu de roue monté de manière rotative sur le support de roue (42) autour d'un axe de rotation (DA), une roue disposée sur le moyeu de roue et comportant un anneau de jante (44) s'étendant de manière symétrique en rotation autour de l'axe de rotation (DA), une extrémité de l'amortisseur (12) opposée au contre-palier (18) est disposée sur le support de roue (42) et l'élément de couplage (48) est agencé de telle sorte que l'axe longitudinal (LA) s'étende entre la deuxième extrémité (64) de l'élément de couplage (48) et au moins une partie de l'anneau de jante (44).

6. Véhicule comportant un châssis du véhicule (66) et un dispositif de suspension selon l'une des revendications précédentes, qui comprend au moins un élément de palier entourant l'élément stabilisateur (46), fixé à l'élément stabilisateur (46) et conçu pour permettre le pivotement de l'élément stabilisateur (46) autour de l'axe de pivotement de la barre stabilisatrice grâce à une déformation élastique, et au moins un élément de collier de palier disposé de manière fixe sur le châssis du véhicule (66), sur lequel est disposé de manière fixe ledit au moins un contre-palier (18), et qui présente un évidement s'étendant dans la direction de l'axe de pivotement du stabilisateur, dans lequel l'élément stabilisateur (46) est disposé de telle sorte que l'élément de palier soit situé entre l'élément de collier de palier et l'élément stabilisateur.
